# EUROPÄISCHE PATENTANMELDUNG

(11) **EP 0 920 034 A1**
(43) Veröffentlichungstag der Anmeldung: **02.06.1999**
(21) Anmeldenummer: 98402729.2
(22) Anmeldetag: 30.10.1998
(51) Int. Cl.: H01B 3/44

(54) **Isoliermaterial auf der Basis von Polyvinylchlorid**

(30) Priorität: 27.11.1997 DE 19752481
(71) Anmelder: ALCATEL, 75008 Paris (FR)
(72) Erfinder: Köhler, Rainer, Dipl.-Ing., 91227 Leinburg (DE)
(74) Vertreter: Döring, Roger, Dipl.-Ing.

(57) **Zusammenfassung**

Es wird ein für Kabel oder Leitungen verwendbares Isoliermaterial auf der Basis von Polyvinylchlorid angegeben. Dem Basismaterial sind Zusätze zur Einstellung von Flammwidrigkeit sowie Stabilisatoren und Verarbeitungshilfsmittel hinzugegeben. Das Isoliermaterial ist mit folgender Zusammensetzung im Brandfall außerdem raucharm:
- 100 Teile Polyvinylchlorid
- 40 bis 60 Teile Polymerweichmacher
- 10 bis 50 Teile Magnesiumcarbonat
- 10 bis 50 Teile eines Metallhydrats
- 5 bis 15 Teile einer Zink/Zinn-Verbindung.

## Beschreibung

Die Erfindung bezieht sich auf ein Isoliermaterial auf der Basis von Polyvinylchlorid zur Verwendung für eine Umhüllung von langgestrecktem Gut, bei welchem dem Basismaterial Polyvinylchlorid Zusätze zur Einstellung von Flammwidrigkeit sowie Stabilisatoren und Verarbeitungshilfsmittel hinzugegeben sind (GB-PS 1 260 533).

,,Langgestrecktes Gut" im Sinne der Erfindungen können elektrische und optische Kabel bzw. Leitungen sowie Leitungsrohre sein. Von besonderem Interesse sind hier elektrische lnstallationsleitungen und sogenannte Plenumkabel, die in Gebäuden zur Stromversorgung unterschiedlichster Verbraucher und zur Informationsübertragung verlegt werden. Als Isoliermaterial wird bei diesen Leitungen vorwiegend Polyvinylchlorid (PVC) verwendet. Neben guten elektrischen Eigenschaften hat PVC allerdings den Nachteil, daß im Brandfall das darin enthaltene Halogen als Wasserstoffverbindung abgespalten wird. Es findet eine Zersetzung des PVCs unter starker Rauchentwicklung statt. Die heutigen Anforderungen an ein für Leitungen, die in Gebäuden verlegt werden, verwendbares Material werden von PVC daher nicht erfüllt, wenn demselben nicht geeignete Zusätze hinzugegeben werden. Ein solches Isoliermaterial darf im Brandfall kaum toxische Gase abgeben und insbesondere keinen störenden Rauch erzeugen.

Zur Vermeidung dieser Nachteile sind dem Isoliermaterial nach der eingangs erwähnten GB-PS 1 260 533 Füllmaterialien beigegeben, die Säure binden können. Als Füllmaterialien werden beispielsweise feinteilige thermostabile Metalle, wie Erdalkalimetalle, eingesetzt. Besonders erwähnt sind Magnesiumcarbonat und Calciumcarbonat. Durch ein solches Isoliermaterial kann im Brandfall die Abspaltung toxischer Gase weitgehendst vermieden werden. Das Isoliermaterial kann jedoch brennen und die Entwicklung von Rauch ist nicht zu vermeiden.

Der Erfindung liegt die Aufgabe zugrunde, das eingangs beschriebene Isoliermaterial auf einfache Weise flammwidrig und raucharm zu machen.

Die Aufgabe wird gemäß der Erfindung durch folgende Zusammensetzung gelöst:
- 100 Teile Polyvinylchlorid
- 40 bis 60 Teile Polymerweichmacher
- 10 bis 50 Teile Magnesiumcarbonat
- 10 bis 50 Teile eines Metallhydrats
- 5 bis 15 Teile einer Zink/Zinn-Verbindung.

Dieses Isoliermaterial auf der Basis von PVC ist für den Brandfall als sicheres Material geeignet. Es ist besonders flammwidrig, so daß es selbst bei offener Flamme kaum brennt. Das Weiterleiten von Feuer, beispielsweise in Schächten, kann daher ausgeschlossen werden. Durch den gleichzeitigen Einsatz der Zink/Zinn-Verbindung und eines geeigneten Metallhydrats ist außerdem sichergestellt, daß im Brandfall kaum Rauch entwickelt wird.

Ausführungsbeispiele des Erfindungsgegenstandes werden im folgenden erläutert.

Als Basismaterial wird ein Weich-PVC verwendet, das beispielweise die Kennzahl K70 hat. Geeignete Metallhydrate sind beispielsweise Aluminiumtrihydrat oder Magnesiumhydroxid. Als Zink/Zinn-Verbindungen können beispielsweise Zinkstannat oder Zinkhydroxistannat verwendet werden.

Durch das Magnesiumcarbonat und das Metallhydrat wird das PVC flammwidrig. Es brennt auch bei offener Flamme nur unwesentlich. Ein Weiterleiten von Feuer, beispielsweise in einem Schacht, ist vermieden. Die Flammwidrigkeit des PVCs kann durch die zusätzliche Zugabe von 5 bis 15 Teilen Antimontrioxid noch weiter verbessert werden. Die Zink/Zinn-Verbindung und das Metallhydrat sorgen dafür, daß im Brandfall kaum Rauch entwickelt wird. Fluchtwege bleiben daher auch im Brandfall gut erkennbar.

Ein besonders geeigneter Aufbau des lsoliermaterials geht aus folgendem Beispiel hervor:
- 100 Teile Polyvinylchlorid
- 50 Teile Polymerweichmacher
- 40 Teile Magnesiumcarbonat
- 40 Teile Aluminiumtrihydrat
- 10 Teile Zinkhydroxistannat
- 10 Teile Antimontrioxid
- 5 Teile Stabilisator
- 1 Teil Stearinsäure.

Als Stabilisator kann beispielsweise ein an sich üblicher Bleistabilisator verwendet werden. Die Stearinsäure wird als Verarbeitungshilfsmittel eingesetzt.

## Patentansprüche

1. Isoliermaterial auf der Basis von Polyvinylchlorid zur Verwendung für eine Umhüllung von langgestrecktem Gut, bei welchem dem Basismaterial Polyvinylchlorid Zusätze zur Einstellung von Flammwidrigkeit sowie Stabilisatoren und Verarbeitungshilfsmittel hinzugegeben sind, gekennzeichnet durch folgende Zusammensetzung:
- 100 Teile Polyvinylchlorid
- 40 bis 60 Teile Polymerweichmacher
- 10 bis 50 Teile Magnesiumcarbonat
- 10 bis 50 Teile eines Metallhydrats
- 5 bis 15 Teile einer Zink/Zinn-Verbindung.

2. Isoliermaterial nach Anspruch 1, dadurch gekennzeichnet, daß zusätzlich 5 bis 15 Teile Antimontrioxid enthalten sind.

3. Isoliermaterial nach Anspruch 1 oder 2, dadurch gekennzeichnet, daß als Metallhydrat Aluminiumtrihydrat verwendet ist.

4. Isoliermaterial nach Anspruch 1 oder 2, dadurch gekennzeichnet, daß als Metallhydrat Magnesiumhydroxid verwendet ist.

5. Isoliermaterial nach einem der Ansprüche 1 bis 4, dadurch gekennzeichnet, daß als Zink/Zinn-Verbindung Zinkstannat verwendet ist.

6. Isoliermaterial nach einem der Ansprüche 1 bis 4, dadurch gekennzeichnet, daß als Zink/Zinn-Verbindung Zinkhydroxistannat verwendet ist.

7. Isoliermaterial nach einem der Ansprüche 1 bis 6, gekennzeichnet durch folgende Zusammensetzung:
- 100 Teile Polyvinylchlorid
- 50 Teile Polymerweichmacher
- 40 Teile Magnesiumcarbonat
- 40 Teile Aluminiumtrihydrat
- 10 Teile Zinkhydroxistannat
- 10 Teile Antimontrioxid
- 5 Teile Stabilisator
- 1 Teil Stearinsäure.
